# EUROPEAN PATENT APPLICATION

(11) **EP 4 455 974 A1**
(43) Date of publication of application: **30.10.2024**
(21) Application number: 24160133.5
(22) Date of filing: 28.02.2024
(51) Int. Cl.: G06Q 40/06, G06Q 40/08

(54) **CAPITAL VALUE CALCULATION SYSTEM AND CAPITAL VALUE CALCULATION METHOD**

(30) Priority: 25.04.2023 JP 2023071449
(71) Applicant: Hitachi, Ltd., Tokyo 100-8280 (JP)
(72) Inventor: TANABE, Yosuke, Tokyo, 100-8280 (JP); KATO, Takeshi, Tokyo, 100-8280 (JP); MINE, Ryuji, Tokyo, 100-8280 (JP); WATANABE, Koichi, Tokyo, 100-8280 (JP); FUNANE, Tsukasa, Tokyo, 100-8280 (JP)
(74) Representative: MERH-IP Matias Erny Reichl Hoffmann Patentanwälte PartG mbB

(57) **Abstract**

In a capital value calculation system that calculates a capital value using a computer, the computer includes: an input unit obtaining a market asset parameter that relates to economic activity of a human and is tradable in a market, and a non-market asset parameter that relates to activity of the human and is non-tradable in the market; and a calculation processing unit obtaining 3 utilities consisting of economic utility, environmental utility, and social utility of a concerned region from the market asset parameter and the non-market asset parameter, calculating a social objective index of the concerned region as a weighted combined value of the 3 utilities, calculating a weighting coefficient function of a restriction condition function that expresses correlation between the market asset parameter and the non-market-asset parameter and that gives an extremum that is a difference between the social objective index and the restriction condition function, and calculating a capital value by inputting the market asset parameter, and the non-market asset parameter into the weighting coefficient function; and an output unit outputting the capital value.

## Description

### BACKGROUND OF THE INVENTION

The present invention relates to a capital value calculation system and a capital value calculation method that calculate asset values including non-market assets under a social objective for overcoming social challenges and social restrictive conditions.

Recently, attempt to realize a sustainable society has been in progress by quantitively evaluating values of non-market assets that are difficult to measure based on market values such as a natural capital constituting of ecological systems such as atmosphere, water, soil, trees, animals and microorganisms, a social capital constituted of infrastructures such as roads, harbors, railways used in public, an institutional capitals constituted of institutions such as education, a medical institution, jurisprudence, administration and finance, and by incorporating such non-market assets into economic activities (for example, see Hirofumi Uzawa, Economic analysis of social common capital).

Relating to such attempts, for example, U.S. Patent No. 07613646 proposes, as a value calculation system for calculating an economic value based on correlation between a market capital and a non-market capital, "generates values that become financial assets based on an expansion the Black-Scholes method that explains correlational relationship between non-trading assets and market assets which form a basis".

### SUMMARY OF THE INVENTION

U.S. Patent No. 07613646 discloses a value calculation system that calculates economic values based on correlation between market assets and non-market assets. However, the system evaluates a value of the non-trading assets (non-market assets) in a form that the non-trading assets correspond to market prices decided based on a market principal and hence, even when the non-market assets are traded as financial derivatives at such prices, there is no assurance for achieving a social objective that is a sustainable society cannot be guaranteed. Specifically, for example, although values of natural capitals are considered high in an environment emphasizing society, the values of the natural assets are likely to be estimated as low in an economy emphasizing society. Further, natural capital stocks that change corresponding to various social scenarios and conditions and values of ecological system services obtained from such natural capital stocks have not been calculated based on a unified standard.

Further, there has been also proposed an idea that copes with dynamics (dynamic market). However, such an idea is an analysis of correlation between non-market assets and market assets, and remains as the calculation by taking into account economic values of markets, and cannot perform consideration calculation that takes into account economic, environmental and social values. With respect to the dynamic value conversion corresponding to a state of society at this point of time, there is a tendency that the value of the natural capital stock is increased when the natural capital stock is in short with respect to a demand from society, and the value of natural capital stock is decreased when the natural capital stock is sufficient. Accordingly, such an idea does not maximize values for the sustainable society.

In view of the above-mentioned circumstances, it is an object of the present invention to provide a capital value calculation system and a capital value calculation method for calculating a capital value of a non-market asset for solving social challenges based on a social objective and a restriction condition corresponding to a selected region.

As described above, according to the present invention, there is provided a capital value calculation system that calculates a capital value using a computer, wherein the computer includes:
an input unit configured to obtain a market asset parameter that relates to economic activity of a human and is tradable in a market, and a non-market asset parameter that relates to activity of the human and is non-tradable in the market;
and a calculation processing unit configured to obtain 3 utilities consisting of economic utility, environmental utility and social utility of a concerned region from the market asset parameter and the non-market asset parameter,
to calculate a social objective index of the concerned region as a weighted combined value of the 3 utilities, to calculate a weighting coefficient function of a restriction condition function that expresses correlation between the market asset parameter and the non-market-asset parameter that gives an extremum that is a difference between the social objective index and the restriction condition function, and to calculate a capital value by inputting the market asset parameter, and the non-market parameter into the weighting coefficient function; and/or
an output unit configured to output the capital value.

Further, according to the present invention, there is provided a capital value calculation method for calculating a capital value using a computer, the method comprising: a step of obtaining a market asset parameter that relates to economic activity of a human and is tradable in a market, and a non-market asset parameter that relates to activity of the human and is non-tradable in the market; a step of obtaining obtain 3 utilities consisting of economic utility, environmental utility and social utility of a concerned region from the market asset parameter and the non-market asset parameter; a step of calculating a social objective index of the concerned region as a weighted combined value of the 3 utilities; a step of calculating a weighting coefficient function of a restriction condition function that expresses correlation between the market asset parameter and the non-market-asset parameter that gives an extremum that is a difference between the social objective index and the restriction condition function; and a step of calculating a capital value by inputting the market asset parameter, and the non-market asset parameter into the weighting coefficient function; and/or a step of outputting the capital value.

According to the present invention, the calculation of a capital value of a non-market asset for overcoming social challenges can be performed based on a social objective and a restriction condition corresponding to a selected region.

### BRIEF DESCRIPTION OF THE DRAWINGS

Fig. 1 is a view illustrating a schematic configurational example of a capital value calculation system according to an embodiment 1 of the present invention,
Fig. 2 is a view illustrating an example of a capital value coefficient of a non-market asset,
Fig. 3 is a view illustrating a configurational example of a capital value calculation program according to the embodiment 1 of the present invention,
Fig. 4 is a view illustrating a schematic configurational example of a capital value calculation system according to the embodiment 2 of the present invention,
Fig. 5 is an example of a predicted scenario,
Fig. 6 is a view illustrating a CO₂ capital value coefficient and a forest capital value coefficient for every future social form A, B, C in comparison in terms of magnitude,
Fig. 7 is a view illustrating configurational example of a capital value calculation program according to the embodiment 2 of the present invention,
Fig. 8 is a view illustrating a schematic configurational example of a capital value calculation system according to an embodiment 3 of the present invention,
Fig. 9 is a view illustrating a result of trial calculation obtained by a time sequential operation,
Fig. 10 is a view illustrating a social structure and social operation instances that can be realized by the capital value calculation system 1,
Fig. 11 is a graph illustrating the relationship between supply and cost on coordinates,
Fig. 12 is a characteristic graph illustrating a relationship expressed by a formula (12),
Fig. 13 is a graph illustrating social vectors when social sensitivity β is used as a valuable and a social objective is changed,
Fig. 14 is a view illustrating a configurational example of a parametric insurance system,
Fig. 15 is a view illustrating a concept of the present invention in a comprehensive manner,
Fig. 16 is a view illustrating data form examples of weightings applied to a market asset parameter, a non-market asset parameter and social utility, and
Fig. 17 is a view illustrating a user interface example of a computer application of the capital value calculation system 1.

### DETAILED DESCRIPTION OF THE PREFERRED EMBODIMENTS

Embodiments of the present invention are described using drawings.

### Embodiment 1

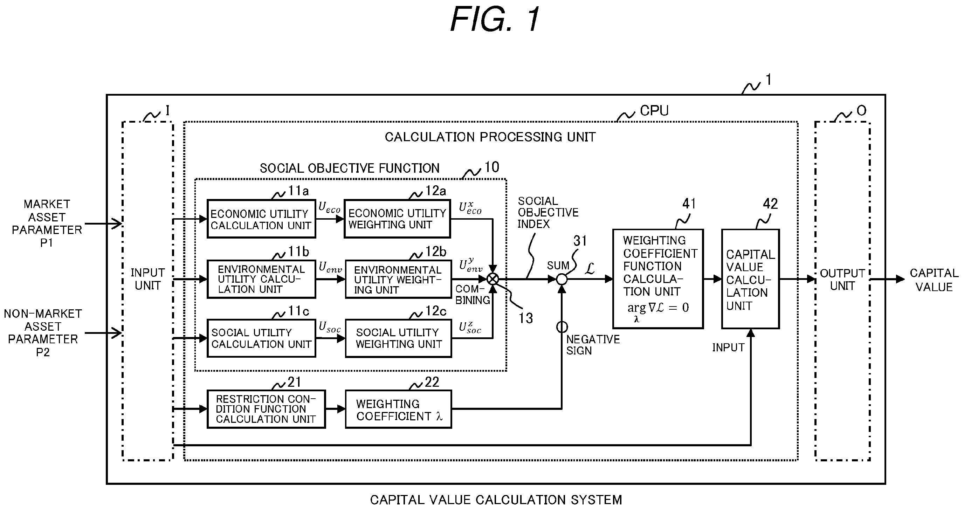

Fig. 1 is a view illustrating a schematic configurational example of a capital value calculation system according to an embodiment 1 of the present invention.

The capital value calculation system 1 is realized by using a computer, and includes an input unit I, an output unit O, and a calculation processing unit CPU as main constitutional elements thereof. However, the capital value calculation system 1 may suitably include constitutional elements other than these constitutional elements. These constitutional elements may be, for example, a database that preserves various data in advance, preserves data as intermediate generating data, or data as a final product, or external equipment or the like that is suitably connected to the capital value calculation system 1 via a network.

Among these constitutional elements, the input unit I fetches at least a market asset parameter P1 and non-market asset parameter P2. In this embodiment, "fetches" means the acquisition of these parameters from a cloud via a network, the manual inputting of these parameters by a user or any mode by which these parameters are acquired from a database inside or outside the computer.

Further, the input unit I is usable for the reception of a selection instruction of various processing menus of the capital value calculation system 1 from a user, the reception of a selection instruction of a regional condition, or the reception of a social objective or the like.

In this embodiment, the market asset parameter P1 is an index such as a manufactured capital, a human capital or rare resource that relates to economic activities of humans and is tradable in markets. On the other hand, non-market asset parameter P2 is an index such as an institutional capital that includes a natural capital made of ecological system, a social capital used in a public and social system, and relates to human activities and is not tradable in markets. At least one of these indexes is fetched as the market asset parameter P1 or the non-market asset parameter P2.

In this manner, the input unit I performs a function of inputting the market asset parameter P1 formed of the index such as the manufactured capital, the human capital and rare resources that relate to economic activities of humans and is tradable in markets and the non-market asset parameter P2 formed of the index such as the natural capital, the social capital or institutional capital that relates to activities of humans and is not tradable in markets.

The calculation processing unit CPU calculates a capital value in accordance with steps described in detail hereinafter, and outputs an acquired capital value from the output unit O. The outputted capital value is visualized and displayed on a monitor screen, for example.

In the processing performed by the calculation processing unit CPU, first of all, individually inputted parameters P (P1, P2) of a market asset and a non-market asset are allocated to at least any one of three-dimensional factors consisting of economy, environment and society. The parameter P that influences economy is classified to economy, the parameter P that influences environment is classified to environment, and the parameter P that influences society is classified to society. Further, magnitudes (utilities) of influences that the respective parameters P effect the respective three-dimensional factors of economy, environment and society are obtained as economic utility Ueco, environmental utility Uenv and social utility Usoc by being expressed in numerical form. The processing up to this stage is performed by an economic utility calculation unit 11a, an environmental utility calculation unit 11b and a social utility calculation unit 11c.

Next, in the economic utility weighting unit 12a, the environmental utility weighting unit 12b and a social utility weighting unit 12c, to the economic utility Ueco, the environmental utility Uenv and the social utility Usoc obtained by the economic utility calculation unit 11a, the environmental utility calculation unit 11b and the social utility calculation unit 11c, weighting that reflects a characteristic of a region for every region where an analysis is performed (hereinafter, such a region being referred to as a concerned region) thus calculating weighted economic utility U^{x}eco, the weighted environmental utility U^{y}env and the weighted social utility U^{z}soc. The weighting that reflects the characteristic of the region is information contained in a selection instruction of a region condition given from a user via the input unit I, or information prepared in advance for every region.

A combining unit 13 obtains a product of the weighted economic utility U^{x}eco, the weighted environmental utility U^{y}env and the weighted social utility U^{z}soc, and sets the product as a social objective index. Calculation processing up to the combining unit 13 is performed for obtaining the social objective function and hence, it is safe to say that a social objective function unit 10 is formed of these units.

The social objective function obtained by the social objective function unit 10 is a total product obtained by applying weighting to magnitudes of influences that the parameter P of the market asset or the non-market asset gives to the respective three-dimensional factors consisting of economy, environment and society corresponding to the regional circumstance. This total product is a collected value of influences given to the respective three-dimensional factors consisting of economy, environment and society, and the maximization of the total product becomes a social objective.

On the other hand, among parameters, there exist negative influence factors against three-dimensional factors. Alternatively, there exists a parameter that has a tradeoff relationship, for example where the parameter becomes a positive influence factor with respect to one of three-dimensional factors but becomes a negative influence factor with respect to the other three-dimensional factors. Further, among the parameters, there exists a correlation such as a proportion or an inverse proportion. Accordingly, in the restriction condition function calculation unit 21, processing is performed such that parameters having degrees of influences to the respective three-dimensional factors of economy, environment and society are extracted with restriction conditions, weighting is applied to the parameters in the weighting coefficient unit 22, and the weighted parameters are multiplied by a negative sign, and the parameters are added to the social objective function obtained by the social objective function unit 10 in the addition unit 31. In such processing, the restriction condition may be expressed as an index that indicates a correlation between the market asset parameter and the non-market asset parameter. Accordingly, the condition that maximizes the social objective is obtained by grasping the condition as numerical values.

Further, in the processing performed by the calculation processing unit CPU, weighting coefficients are adjusted in a weighting coefficient function calculation unit 41, and capital values that reflect the market asset parameter P1 and the non-market asset parameter P2 are obtained as numerical values by a capital value calculation unit 42. These capital values are obtained for respective concerned regions. In the adjustment of the weighting coefficients, it is desirable to calculate a weighting coefficient function of a restriction condition function that gives an extremum of the difference between the social objective function that calculates the social objective index and a restriction condition function that indicates a correlation between a market asset parameter and a non-market asset parameter.

As described above, in the processing performed by the calculation processing unit CPU, the capital value is calculated such that three utilities consisting of the economic utility Ueco, the environmental utility Uenv and the social utility Usoc in the concerned region are obtained with weighting using the market asset parameter P1 and the non-market asset parameter P2, the weighting coefficient function of the restriction condition function that gives an extremum of the difference between the social objective function that calculates the social objective index of the concerned region as the combined value and the restriction condition function indicating the correlation between the market asset parameter P1 and the non-market asset parameter P2, and the market asset parameter P1 and the non-market asset parameter P2 are inputted to the weighting coefficient function.

Hereinafter, processing performed by the calculation processing unit CPU is described in detail with reference to a specific example. First, setting of a social objective function is described.

In this case, assume that an example of the market asset parameter P1 is a production activity Xt and a preservation activity Yt, and an example of a non-market asset parameter P2 is a CO₂ amount Vt in atmosphere and a forest biomass amount Rt. Further, the weighted economic utility is expressed as U^{x}eco, the weighted environmental utility is expressed as U^{y}env and the weighted social utility is expressed as U^{z}soc.

In this case, in the social objective function 10 illustrated in Fig. 1, the social objective based on the three-dimensional values consisting of the weighted economic utility U^{x}eco, the weighted environmental utility U^{y}env and the weighted social utility U^{z}soc is set. The social objective is based on the three-dimensional value, and is defined on a three-dimensional space formed by 3 axes consisting of a X axis, a Y axis and a Z axis.

First, the weighted economic utility U^{x}eco is given by U^{x}eco=F (Xt) where weighting is set such that x=1 using a gloss product F(Xt) relating to production activity Xt as an index.

Next, the weighted environmental utility U^{y}env and the social utility U^{z}soc are given. In this embodiment, with reference to the environment, an index V0-Vt that is decreased as a CO₂ amount Vt is increased using a CO₂ amount V0 (= (600 billion tons) in atmosphere when the industrial revolution occurred as a reference value, and social sensitivity of the index is expressed as weighting β (β being a numerical value between 0 and 1). As a result, U^{y}env·U^{z}soc=(V0-Vt)^{β} is given. In the formula, U^{y}env·U^{z}soc is combined, and there exists a relationship of β=y+z. This function means that as the social sensitivity β approaches 1, the degree of reduction of environmental and social utilities attributed to the increase of CO₂ amount Vt is increased.

As described above, the society objective of this society is by the following formula (1) by maximizing the social objective utility function consisting of the weighted economic utility U^{x}eco, the weighted environmental utility U^{y}env, and the weighted social utility U^{z}soc.
[Formula 1]

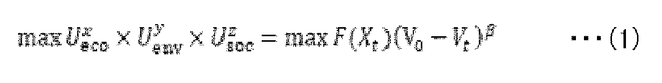

Next, setting of the restricting condition function is described. In the restriction condition function calculation unit 21 illustrated in Fig. 1, restriction conditions relating to a CO₂ amount Vt in atmosphere, a forest biomass amount Rt, a production activity Xt and a preservation activity Yt that are quantities of state of this society are set.

First, a change of CO₂ amount Vt in atmosphere with a lapse of time is expressed by a following formula (2) by taking into account the increase of the CO₂ amount Vt proportional to the production activity Xt, the absorption of a marine surface layer proportional to the CO₂ amount Vt in atmosphere, and the absorption in forests proportional to a forest biomass Rt.

[Formula 2] $\frac{{dV}_{t}}{dt} = {aX}_{t} - {μV}_{t} - {γR}_{t}$

In the formula, α, µ and γ are a production activity CO₂ emission coefficient, an ocean CO₂ absorption coefficient, a forest CO₂ absorption coefficient.

Next, a change in forest biomass Rt with a lapse of time is expressed by the following formula (3) by taking into account the increase proportional to a forest biomass Rt assuming that a carrying capacity is sufficiently large, the reduction proportional to a production activity Xt, and the increase proportional to a forest perseveration activity Yt. [Formula 3] $\frac{{dR}_{t}}{dt} = {δR}_{t} - {bX}_{t} + {cY}_{t}$

In the formula (3), δ, b, c are a biomass increase coefficient, a biomass utilization coefficient, and a biomass preservation coefficient respectively.

Finally, a production activity Xt and a forest preservation activity Yt are given by the following as amounts of distribution of a total amount K of a human capital.

[Formula 4] ${X}_{t} + {Y}_{t} = K$

Next, the calculation of a capital value is described. In the weighting coefficient function calculation unit 41 and a capital value calculation unit 42 illustrated in Fig. 1, a Lagrangian function expressed in the following formula (5) is obtained based on a difference between a formula (1) that expresses a social objective and formulas (2), (3), (4) that express weighted restriction conditions.

[Formula 5]

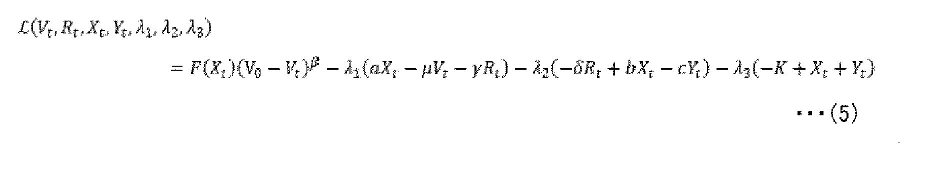

In the formula (5), λ1, λ2, λ3 are Lagrange multipliers. From a viewpoint of mathematical economics, these values are interpreted as a value when a CO₂ amount Vt in atmosphere is increased by one unit marginally, a value when a forest biomass Rt is increased by one unit marginally, and a value when a human capital is increased by one unit marginally. That is, these values are interpreted as capital values. With respect to the restriction conditions, the positive or the negative direction of the increase of a CO₂ amount Vt in atmosphere by one unit is determined by taking into account that such an increase acts in the direction of decreasing a set social objective.

λ1, λ2, λ3 are obtained by the formulas (7), (8), (9) using a formula (6) as multipliers that give the maximum value in the formula (5). [Formula 6] 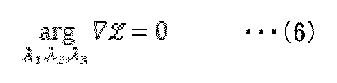 [Formula 7] 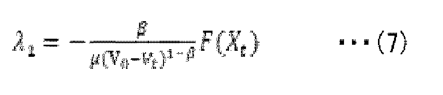 [Formula 8] 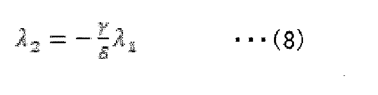 [Formula 9]

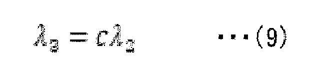

According to the formula (7), it is understood that the capital value λ1 when a CO₂ amount Vt in atmosphere is increased by one unit marginally is socially a negative value since the capital value λ1 is proportional to a coefficient expressed by the formula (10) and is given with a negative sign with respect to a gross product F(Xt). [Formula 19] $- β / μ {\left({V}_{0}-{V}_{t}\right)}^{1 - β}$

On the other hand, according to the formula (8), the imputed value λ2 when a forest biomass Rt is increased by one unit marginally is proportional to the CO₂ capital value λ1 by (- γ/δ) and is again given a negative sign and hence, the larger the negative value of the CO₂ capital value λ1 is, the larger the social value becomes.

As a result, according to the formula (9), also with respect to the capital value λ3 when a human capital is increased by one unit marginally, the capital value λ3 is proportional to the forest biomass capital value λ2 by c so that it is understood that its social value is increased.

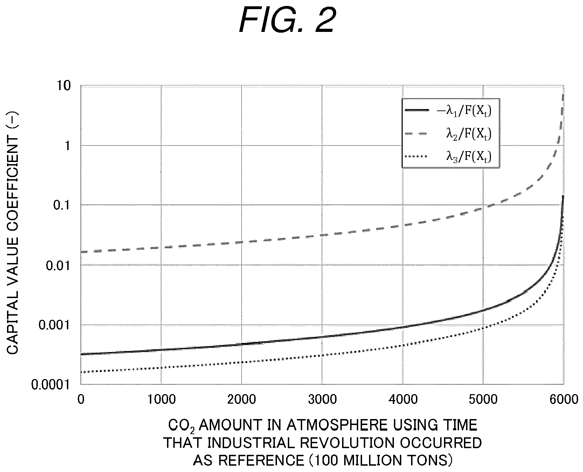

Fig. 2 is a graph illustrating one example of a capital value coefficient of a non-market asset. In the graph, a CO₂ amount in atmosphere is taken on an axis of abscissas while setting the CO₂ amount V0 of 600 billion tons in atmosphere when the industrial revolution occurred as an origin, and a capital value coefficient normalized by a gross product F(Xt) is taken on an axis of ordinates.

The trial calculation in Fig. 2 was obtained by setting, in the above-mentioned formula, a CO² amount V0 in atmosphere when the industrial revolution occurred to 600 billion tons, the weighting β of social sensitivity to 0.05, a marine CO₂ absorption coefficient µ to 0.04, a forest CO₂ absorption coefficient γ to 0.5, a biomass increase coefficient δ to 0.01, a biomass preservation coefficient c to 0.01, and a total amount K of a human capital to 8 billion.

In Fig. 2, a solid line indicates a CO₂ capital value coefficient (-λ₁/F(Xt)) based on the formula (7), a broken line indicates a forest capital value coefficient (λ₂/F(Xt)) based on the formula (8), and a dotted line indicates a human capital value coefficient (λ₃/F(Xt)) based on the formula (9). CO₂ makes a negative contribution to a social objective and hence, the CO₂ capital value coefficient (-λ₁/F(Xt)) is indicated by applying a negative sign.

According to Fig. 2, it is understood that all capital values have increased as the CO₂ amount in atmosphere has increased compared to the CO₂ amount in atmosphere when the industrial revolution occurred.

Specifically, to study the CO₂ capital value (-λ₁/F(Xt)) indicated by a solid line, the environmental utility and the social utility are designed so as to decrease corresponding to the increase of the CO₂ amount in atmosphere as expressed by U^{y}enw·U^{z}soc = (V0 - Vt) in set social objective. Accordingly, it is understood that the larger the CO₂ amount in atmosphere is, a social cost with respect to the emission of the CO₂ amount in atmosphere per unit is increased.

Next, to study the forest capital value (λ₂/F(Xt)) indicated by a broken line, from the formula (8), it is understood that the forest capital value coefficient (λ₂/F(Xt)) is increased proportional to the CO₂ imputed cost. This is because that a forest absorbs CO₂ amount in atmosphere and hence, as a result, environmental utility and social utility are increased.

Lastly, to study a human capital value (λ₃/F(Xt)) indicated by a dotted line, from a formula (11) described later, it is understood that the human capital value (λ₃/F(Xt)) is increased proportional to the forest capital value (λ₂/F(Xt)). In this case, the human capital can be allocated to either the production activity that emits CO₂ or the preservation activity for preserving forests. However, as can be understood from the fact that the human capital value is proportional to the forest reservation coefficient, it is understood that the larger the CO₂ amount in atmosphere is or the higher the forest preservation coefficient is, the larger the social value of the human capital becomes.

According to the capital value calculation system according to the embodiment 1 described in detail heretofore, the calculation of the capital value of the non-market asset for overcoming the social challenges can be realized based on the social objective and the restriction condition in response to the selected region. It has become possible to perform the comprehensive determination including the capital value calculation of also the non-market assets whose value cannot be accurately grasped conventionally besides the market assets.

This advantageous effects can be achieved by "a capital value calculation system that calculates a capital value using a computer, wherein the computer comprises: an input unit configured to input a market asset parameter that formed of an index such as manufactured capital, human capital and rare resources that relates to economic activity of a human and is tradable in a market, and a non-market asset parameter that formed of an index such as private property, public property and environmental property relates to activity of the human and is non-tradable in the market; and a calculation processing unit configured to obtain 3 utilities consisting of economic utility, environmental utility and social utility of a concerned region from the market asset parameter and the non-market asset parameter, to calculate social objective function for calculating a social objective index of the concerned region as a weighted combined value of the 3 utilities, to calculate a weighting coefficient function of a restriction condition function that expresses correlation between the market asset parameter and the non-market-asset parameter that gives an extremum that is a difference between the social objective index and the restriction condition function, and to calculate a capital value by inputting the market asset parameter, and the non-market asset parameter into the weighting coefficient function; and an output unit configured to output the capital value".

Next, a capital value calculation method that the calculation processing unit CPU of a computer illustrated in Fig. 1 performs in accordance with a program is described.

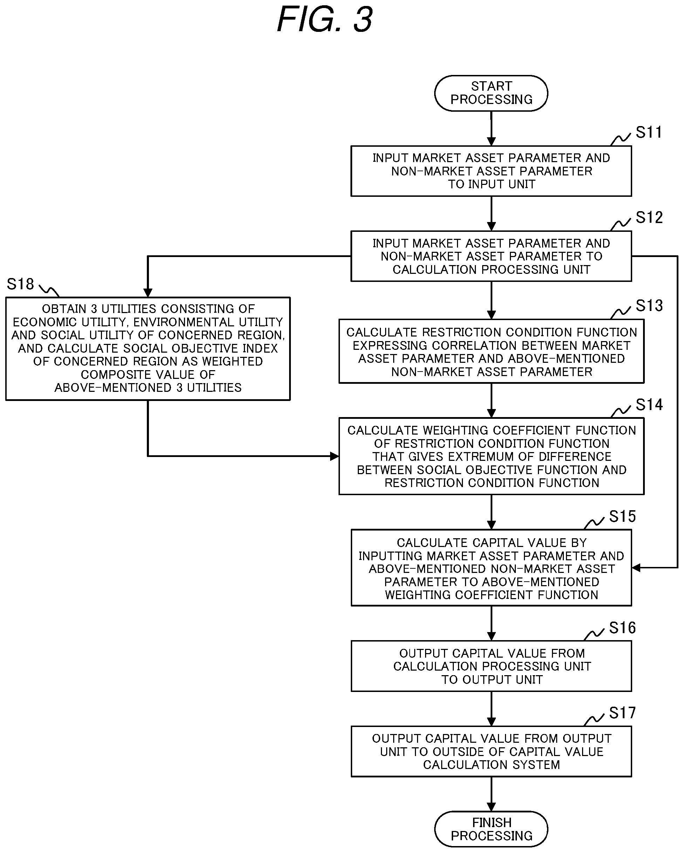

Fig. 3 is a view illustrating a constitutional example of a capital value calculation program. In first processing step S11 illustrated in Fig. 3, the market asset parameter P1 and the non-market asset parameter P2 are inputted to the input unit I, and in processing step S12, the market asset parameter P1 and the non-market asset parameter P2 are inputted to the calculation processing unit CPU.

In processing step S18, three utilities consisting of economic utility Ueco, environmental utility Uenv and social utility Usoc in a concerned region are obtained using the market asset parameter P1 and the non-market asset parameter P2, and the social objective index in the concerned region is calculated as the weighted combined value of three utilities. In processing step S13, the restriction condition function that expresses the correlation between the market asset parameter P1 and the non-market asset parameter P2 is calculated.

In processing step S14, the weighting coefficient function of the restriction condition function that gives an extremum of the difference between the social objective function and the restriction condition function is calculated. In processing step S15, the capital value is calculated by inputting the market asset parameter and the non-market asset parameter into above-mentioned weighting coefficient function. In processing step S16, the capital value is outputted to the output unit from the calculation processing unit. In processing step S17, the capital value is outputted to the outside of the capital value calculation system from the output unit.

According to the embodiment 1 described above, the capital value calculation of the non-market asset parameter for overcoming social challenges can be realized based on the social objective and the restriction conditions corresponding to the selected region.

### Embodiment 2

In the embodiment 1, the acquisition of the capital value is mainly described. In other words, the embodiment 1 is used for verifying that the embodiment 1 describes a trend illustrated in Fig. 2 by correlating the capital value calculation system illustrated in Fig. 1 to the past achievements.

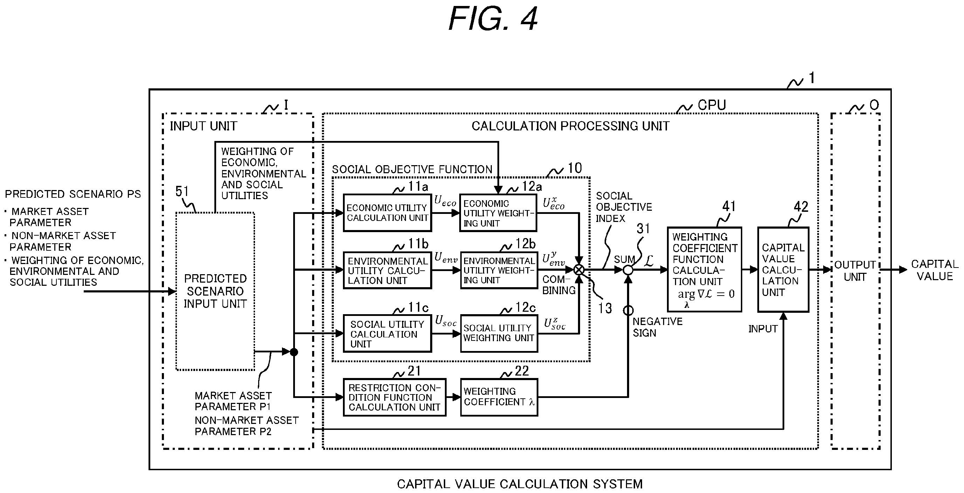

On the other hand, in the embodiment 2, a capital value calculation system that is suitable for the prediction in future is proposed in Fig. 4. The system configuration illustrated in Fig. 4 is substantially equal to the system configuration illustrated in Fig. 1. However, the system configuration illustrated in Fig. 4 differs from the system configuration illustrated in Fig. 1 with respect to the point that the market asset parameter P1 and the non-market asset parameter P2 that form an input and the weightings of the economic utility, the environmental utility and the social utility are given from the predicted scenario input unit 51.

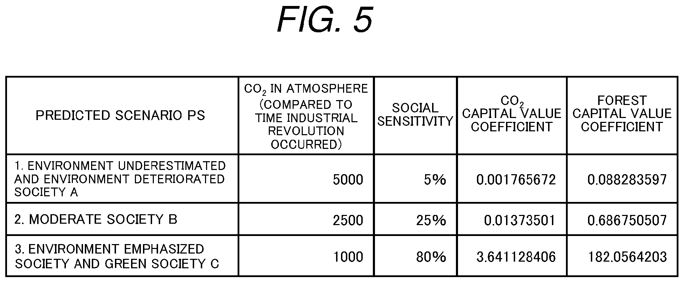

Fig. 5 is illustrating one example of the predicted scenario. The predicted scenario PS according to the embodiment 2 is a scenario where three kinds of patterns (scenarios) of, for example, an environment underestimated and environment deteriorated society A, a moderate society B, and environment emphasized society and clean society C are estimated as shapes of the future society as illustrated in Fig. 5. Further, for every scenario, CO₂ amount in atmosphere (compared to the time of industrial revolution), the social sensitivity, the CO₂ capital value coefficient, and the forest capital value coefficient are held as a specific numerical values.

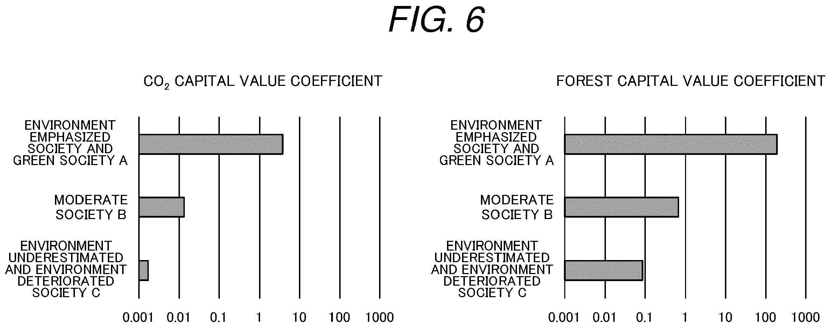

Fig. 6 is a view illustrating the CO₂ capital value coefficient (-λ₁/F(Xt)) and the forest capital value coefficient (λ₂/F(Xt)) for respective social shapes A, B, C by comparing magnitudes of these coefficients. As the predicted scenario PS, it is sufficient to prepare a plurality of scenarios. In this embodiment, the example where the above-mentioned three kinds of capital value coefficient are used is described.

In Fig. 5 and Fig. 6, the first predicted scenario PS (A) is a society where the society underestimates the environment and the environment is deteriorated. Compared to the time of industrial revolution, CO₂ in atmosphere is increased by 500 billion tons. On the other hand, the social sensitivity relating to the environment is low, that is, 5 %. The CO₂ capital value coefficient compared to the gross production of the society is approximately 0.17 % so that a cost for the emission is substantially ignored. Further, the forest capital value coefficient is also approximately 8.82 %. Although the value of the forest is admitted to an extent of a consumer tax, a cost of CO₂ emission is excessively low and hence, it is estimated that the value of the forest cannot become a driver for changing the society.

The second predicted scenario PS (B) is a society in a moderate state where CO₂ amount in atmosphere is increased by 250 billion tons, and the social sensitivity is increased to 25% due to a climate change following such increase of CO₂ amount in atmosphere. The CO₂ capital value coefficient is 1.37% so that the cost for the emission is still low. However, the forest capital value coefficient is 68.6% so that the social value of the forest is high, and it can be estimated that the social value of the forest has a large incentive for shifting the society to the preservation economy.

The third predicted scenario PS (C) is an environment emphasized society where, although CO₂ amount in atmosphere is increased by 100 billion tons, social sensitivity with respect to the increase of CO₂ amount in atmosphere is 80%, that is, extremely high. The CO₂ capital value coefficient becomes 364% and hence, the cost awareness with respect to CO₂ emission is extremely high. Further, the forest capital value coefficient is 18205% and hence, it is estimated that the society has the social structure where all people challenge the preservation and growing of the forest.

Returning to Fig. 4, with respect to the predicted scenario PS, the predicted scenario PS that is prepared by users in advance is stored in a database for example, and the scenario PS that users select is transmitted to the predicted scenario input unit 51 together with other information.

When the predicted scenario is the society after 10 years, the predicted scenario input unit 51 performs processing of estimating the parameters after 10 years based on the market asset parameter P1 and the non-market asset parameter P2 at this point of time, and outputs these predicted parameters to the calculation processing unit CPU. Further, at this stage of processing, it is considered that weightings of the weighted economic utility U^{x}eco, the weighted environmental utility U^{y}env, and the weighted social utility U^{z}soc are also changed and hence, the weightings for every scenario may be set together with processing for estimating the parameters. In such processing, the prediction including the interim history of each year may be also predicted.

In short, the embodiment 2 further includes the predicted scenario input unit 51 in the embodiment 1, and calculates the capital value in the predicted scenario in the concerned region by inputting the predicted scenario in the concerned region that can be adopted under the restriction condition function and is expressed as the combination of the market asset parameter P1 and the non-market asset parameter P2, and the predicted society objective function in the concerned region expressed as the combination of the weightings on three utilities.

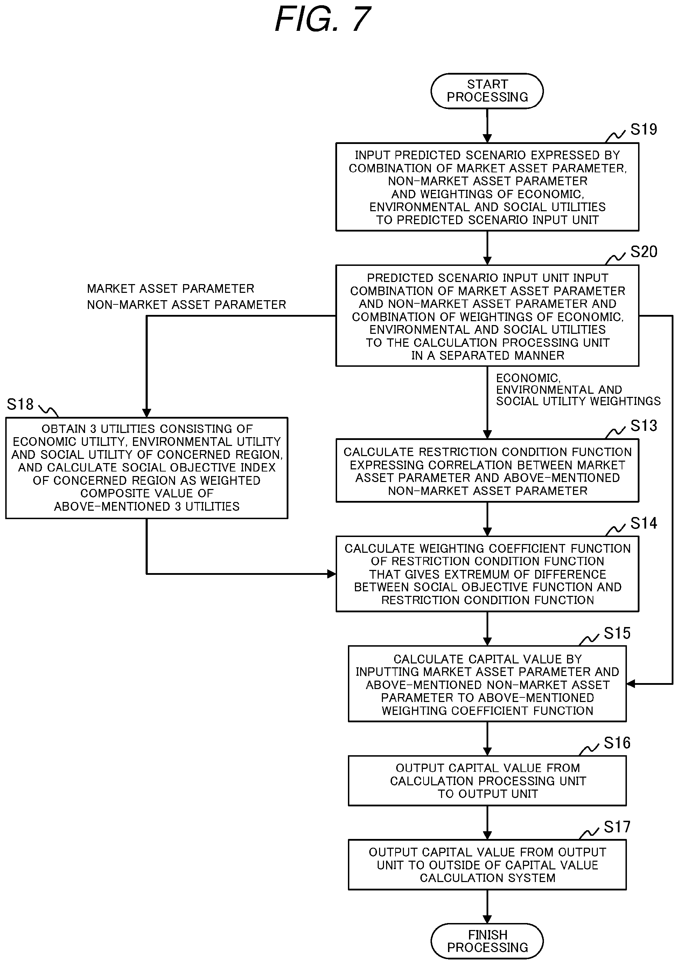

Fig. 7 is a graph illustrating a constitutional example of a capital value calculation program according to the embodiment 2. In the first processing step S19 illustrated in Fig. 7, a predicted scenario expressed by the combination of the market asset parameter P1 and the non-market asset parameter P2, and weightings of the economic utility, the environmental utility and the social utility is inputted in the predicted scenario input unit 51. In processing step S20, the predicted scenario input unit 51 inputs the combination of the market asset parameter and the non-market asset parameter, and the combination of the weightings of the economic utility, the environmental utility and the social utility into the calculation processing unit CPU in a separate manner.

In processing step S18, three utilities consisting of economic utility Ueco, environmental utility Uenv and social utility Usoc in a concerned region are obtained using the market asset parameter P1 and the non-market asset parameter P2, and the social objective index in the concerned region is calculated as the weighted combined value of three utilities. In processing step S13, the restriction condition function that expresses the correlation between the market asset parameter P1 and the non-market asset parameter P2 is calculated.

In processing step S14, a weighting coefficient function of the restriction condition function that gives an extremum value of the difference between the social objective function and the restriction condition function is calculated. In processing step S15, a capital value is calculated by inputting the market asset parameter and the non-market asset parameter to the weighting coefficient function. In processing step S16, the capital value is outputted to the output unit from the calculation processing unit. In processing step S17, the capital value is outputted to the outside of the capital value calculation system from the output unit.

According to the embodiment 2, it is possible to provide the capital value calculation system suitable for the future prediction.

### Embodiment 3

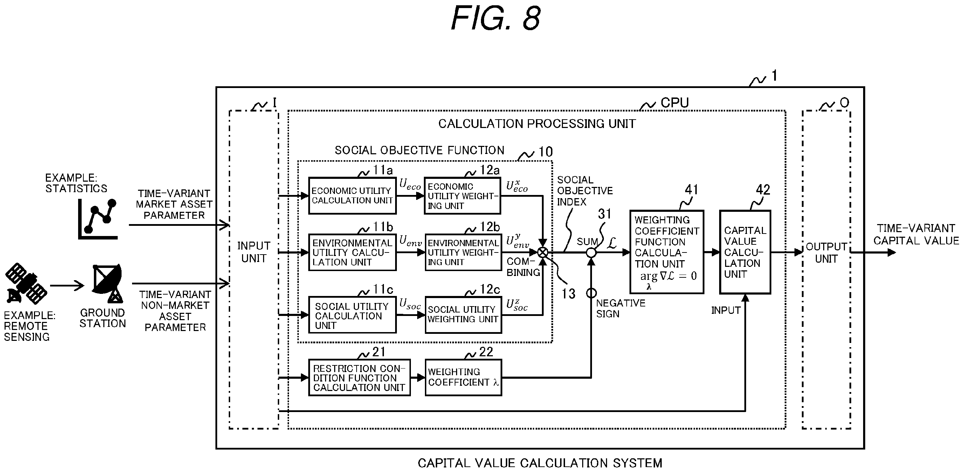

In the embodiment 3, the description is made with respect to an operation of a capital value calculation system that changes with the lapse of time. Fig. 8 is a view illustrating the schematic constitutional example of the capital value calculation system according to the embodiment 3 of the present invention.

In the operation of the capital value calculation system that changes with the lapse of time, the configuration of the system itself is equal to the configuration illustrated in Fig. 1. However, in the embodiment 3, a market asset parameter P1 and a non-market asset parameter P2 that are inputs are each formed of a group of data that changes with the lapse of time.

For example, the market asset parameter P1 is, for example, statistics information that changes with the lapse of time, and the non-market asset parameter P2 is, for example, sensor data that is detected from time to time by remote sensing, and is sensor data that changes with time and is obtained via a ground station.

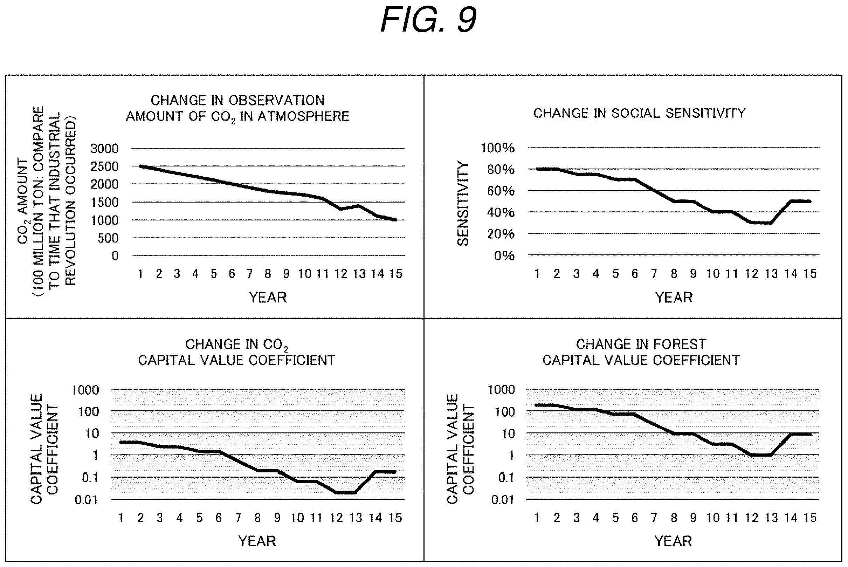

Fig. 9 is a view illustrating a result of trial calculation based on the operation with the lapse of time. In this embodiment, a case is described where a CO₂ amount in atmosphere illustrated on a left upper side of the drawing is inputted time-sequentially by remote sensing, and social sensitivity illustrated in a right upper side is social statistics and is inputted as a parameter that changes with the lapse of time. A change in every year up to 15 years later from a reference point of time is taken on an axis of abscissas in Fig. 9. As CO₂ decreases, the social sensitivity is gradually lowered.

From Fig. 9, it is also understood that, when a market asset parameter P1 and a non-market asset parameter P2 are inputted with the lapse of time, capital value coefficients (a CO₂ capital value coefficient illustrated on a left lower side of the drawing and a forest capital value coefficient illustrated on a right lower side) change by being influenced by these parameters.

In short, the embodiment 3 describes the case where the market asset parameter that changes with the lapse of time based on sensing or statistics of the market asset in the concerned region and the non-market asset parameter that changes with the lapse of time based on sensing or statistics of the non-market asset in the concerned region are used as an input. The operation described in the embodiment 3 can calculate a dynamic change in capital value corresponding to a current point of time of the society.

### Embodiment 4

In the embodiments 1, 2 and 3, the description is made with respect to the constitutional example of the capital value calculation system 1, and the constitutional example of the method of the capital value calculation. On the other hand, hereinafter, the description is made with respect to an example of the social structure and an example of social operation that can be realized by the capital value calculation system 1.

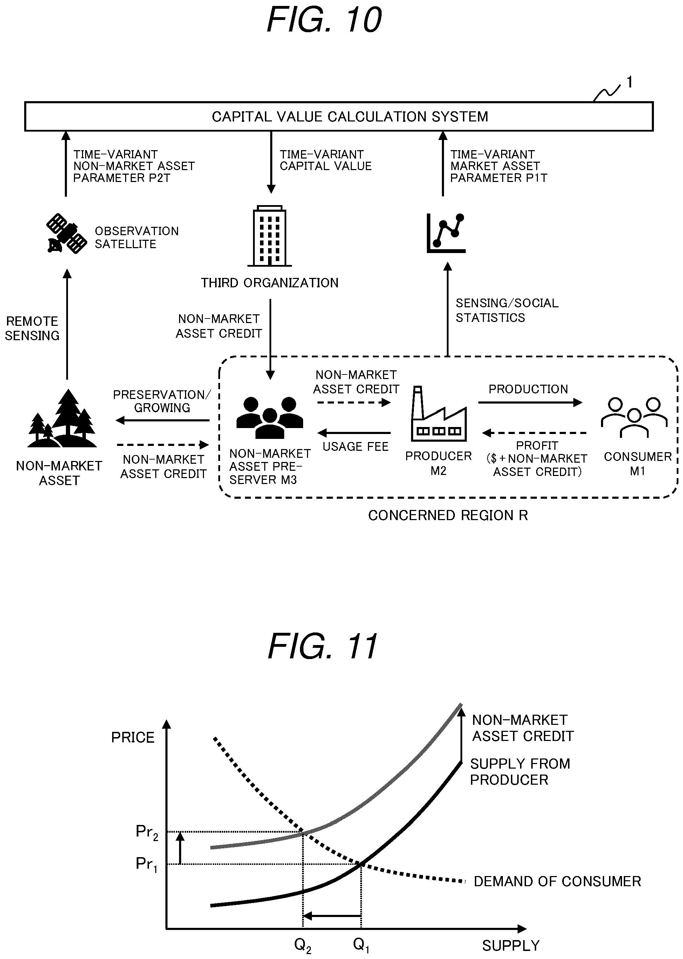

Firstly, in the embodiment 4, with reference to Fig. 10, the description is made with respect to the example of the social structure and the example of the social operation that can be realized by the capital value calculation system 1 by the inputting that changes with the lapse of time illustrated in Fig. 3.

According to Fig.10, in the capital value calculation system 1, a capital value that changes with the lapse of time that is an output that changes with the lapse of time is outputted by using a non-market asset parameter P2T that changes with the lapse of time based on sensing or statistics of a non-market asset as an input or by using a market asset parameter P1T that changes with the lapse of time and is obtained by sensing of social statistics in a concerned region as an input.

The capital value that changes with the lapse of time that the capital value calculation system 1 gives by inputting that changes with the lapse of time realizes a new social operation by being used as described hereinafter in the concerned region R. In this case, the concerned region R is formed of a society that includes consumers M1 and producers M2 and non-market asset preservers M3.

In Fig. 10, with respect to the preservers M3, the non-market assets (for example, forests), the producers M2 and the consumers M1 which they are role players in the concerned region R, the respective relationships between them are indicated by arrows. Among these assets, the non-market asset credit indicated by a dotted line is described in a flow provided to the concerned region R by the capital value calculation system 1.

Firstly, a state is considered where the capital value calculation system 1 does not have the non-market asset credit. In this case, the preserver M3 has a role of preserving and growing the non-market assets and increases a stock of non-market assets. However, the prices of the non-market assets are not properly set, and a compensation for the preservation is extremely low or free of charge.

Accordingly, an incentive for the preservation is not promoted and hence, a demand and a supply are not balanced with respect to the non-market assets or the preservation that the society originally demands. Further, the producers M2 produce products by partially consuming services from the non-market assets (for example, an ecological system service). However, also in this case, the prices of the non-market assets are not properly set and hence, the producers M2 can use an ecological system service at a low price or free of charge, and offers products at a low price. As a result, the consumers M1 can consume the products at a price that is lower than an original reasonable price.

Next, the case is considered where the non-market assets are operated at reasonable capital values based on the present invention. The preservers M3 can obtain the reasonable non-market asset credit as the consideration for the preservation through a third organization. Accordingly, an incentive for the preservation is promoted so that a supply amount is increased. Accordingly, a demand and a supply are balanced with respect to the non-market assets or the preservation that the society originally demands. Further, the producers M2 pay the consideration for the use of an ecological system service as a payment for the non-market asset credit and hence, the producers pass on the price amounting the non-market asset credit to the products.

Fig. 11 is a graph illustrating the relationship between the supply and the price on coordinates. The graph illustrates the relationship between the demand of the consumer and the supply of the producer and the non-market asset credit. To describe the relationship with reference to this graph, in a case where the non-market asset credit is not given, the relationship between the demand of the consumer and the supply of the producer is described as the inverse proportional relationship.

On the other hand, in the case where the non-market asset credit is given, the relationship between the demand of the consumer and the supply of the producer is described as the relationship between three factors including the non-market asset credit. In this case, as the result, although the consumer M1 has been consuming an amount Q1 of the product up to now, the price of the product is pushed up by an amount corresponding to the non-market asset credit and hence, the consumer M1 reduces a consumption amount to Q2. If the product is flexible so that a demand curve is close to the horizontal, tendency is observed that the consumer purchases an alternative product which is cheaper and to which passing on of the price amounting the capital value of an ecological system service is small. As a result, the capital value calculation system is directed in the direction to preserve the non-market asset.

The formation of the social structure illustrated in Fig. 10 can be realized by calculating the capital value that changes with the lapse of time from the market asset parameter P1T that changes with the lapse of time and the non-market asset parameter P2T that changes with the lapse of time, and by submitting the capital value that changes with the lapse of time to a third organization that converts the obtained capital value into a credit, a derivative or an insurance product.

### Embodiment 5

In the embodiment 5, the description is made with respect to the evaluation of a social stability point when a non-market asset credit is used in the embodiment 4. In this embodiment, a finding that the capital value approaches a social objective set in the formula (1) by trading CO₂ and a forest biomass by using the capital values obtained in the embodiments 3 and 4 of the present invention is qualitatively described.

In this embodiment, firstly, a steady state is assumed in the formulas (2), (3) and (4), and by collecting these steady states, the following formula (11) relating to a CO₂ amount Vt in atmosphere and a production activity Xt is obtained. [Formula 11] ${X}_{t} = \left({μV}_{t}+γcK/δ\right) / \left(a+γ\left(b+c\right)/δ\right)$

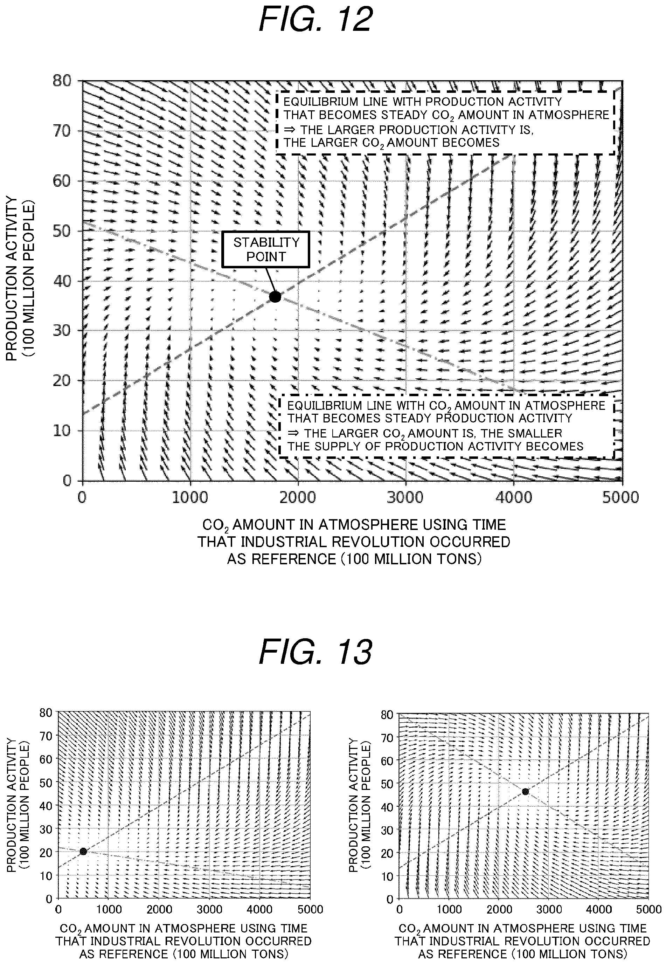

The formula (11) is a relational expression of a steady state, that is, a state where the CO₂ amount Vt and the production activity Xt are equal at dVt/dt = 0 so that a CO₂ amount does not change with time. Further, Fig. 12 is a characteristic graph illustrating the relationship expressed in the formula (12). In Fig. 12, an equilibrium line with the production activity that generates a steady CO₂ amount is indicated by a dotted line. This dotted line expresses that the larger the production activity is, the larger a CO₂ amount becomes. Further, in Fig. 12, an equilibrium line with the production activity that generates a steady CO₂ amount in atmosphere is indicated by a chained line. This chained line expresses that the larger the CO₂ amount is, the smaller the supply of production activity becomes.

As viewed from a viewpoint of a space in Fig. 12 where a CO₂ amount Vt is taken on an axis of abscissas and the production activity Xt is taken on an axis of ordinates, using this line as a boundary, the production activity Xt exceeds an equilibrium state on an upper side and hence, as a result, vectors in a right direction act so that the CO₂ amount Vt is increased, and the production activity Xt becomes lower than the equilibrium state on a lower side and hence, as a result, vectors in a left direction act so that the CO₂ amount Vt is decreased

Further, based on the result of the CO₂ capital value and the forest capital value illustrated in Fig. 2, to study the above-mentioned case from a viewpoint of the supply of the production activity Xt, as illustrated in Fig. 11, when the CO₂ capital value is passed on the price of the product of the producer, the purchase intention of the consumer is lowered so that the production activity Xt is lowered and, at the same time, an incentive of the preserver is increased and hence, the preservation activity Yt becomes active. That is, it is considered that a supply amount of the production activity Xt is inversely proportional to the CO₂ imputed price in the formula (7). Accordingly, in this embodiment, it is assumed that a supply amount of the production activity Xt can be modeled as expressed in the following formula (12). [Formula 12] ${X}_{t} = K {\left({V}_{0}-{V}_{t}\right)}^{1 - β} / {V}_{0}$

The formula (12) is a relational expression of a steady state, that is, a state where the CO₂ amount Vt and supply of the production activity Xt are equal at dVt/dt = 0 so that the production activity does not change with time. That is, as viewed from a viewpoint of a space where a CO₂ amount Vt is taken on an axis of abscissas and the production activity Xt is taken on an axis of ordinates, using this curve as a boundary, the production activity Xt exceeds an equilibrium state on an upper side and hence, as a result, vectors in a downward direction act so that the production activity Xt is decreased, and the production activity Xt becomes lower than the equilibrium state on a lower side and hence, as a result, vectors in an upward direction act so that the production activity Xt is increased.

From the above, it is considered that the social vectors such as vectors illustrated in Fig. 3 work by using the capital values.

In Fig. 12, the CO₂ amount Vt is taken on an axis of abscissas and the production activity Xt is taken on an axis of ordinates. A rightward and upward dotted line indicates an equilibrium relating to the CO₂ amount in the formula (11), and a rightward and downward chained line indicates an equilibrium relating to the production activity in the formula (12). Further, as mentioned before, the increase and the decrease of the CO₂ amount and the production activity present in a separated manner by these lines are expressed by vectors. The vectors are converged in a clockwise direction at an intersecting point between the formula (11) and the formula (12). Accordingly, with the use of the capital value obtained in the previous chapter, it is understood that the economic activity is directed toward the intersecting point in the society indicated this time. In this embodiment, the CO₂ amount becomes 180.8 billion tons using the CO₂ amount at the time that the Industrial Revolution occurred as the reference, and the production activity Xt is 3.8 billion people. As a result, it is considered that the preservation activity becomes 4.2 billion people (Yt = 8.0 - 3.8 = 4.2 (billion people)). In this manner, by making use of the capital value based on the present invention, a reasonable attractor can be implemented in the society as the institutional system for realizing the social objective.

Fig. 13 illustrates social vectors when social sensitivity β is used as a variable and a social objective is changed. A left side in Fig. 13 illustrates social vectors in a social objective that emphasizes the environment (β = 0.15), and a right side in Fig. 13 illustrates social vectors in a social objective that underestimates the environment (β = 0). It is understood from Fig. 13 that, the larger the social sensitivity β is, the intersecting point between the formula (11) and the formula (12) is directed leftward and downward and, as a result, the number of people who engage with the production activity and a CO₂ amount in atmosphere is lowered. In this manner, it is understood that a converging point reasonably changes corresponding to a social objective.

### Embodiment 6

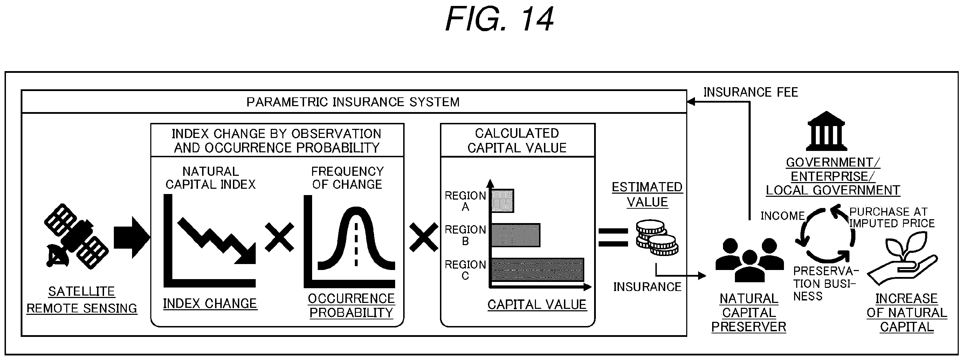

In the embodiment 6, the description is made with respect to the case where the present invention is applied as the parametric insurance. Fig. 14 illustrates a constitutional example of a parametric insurance system.

In the parametric insurance system illustrated in Fig. 14, a market asset parameter that changes with the lapse of time, a non-market asset parameter that changes with the lapse of time are inputted (for example, being inputted using a satellite remote sensor) as information that changes with the lapse of time, and a change in parameter between these parameters and parameters in the past is detected (for example, a change in a natural capital index). Further, frequency of change in parameter is grasped together with probability of occurrence. Then, the change in parameter, frequency and a capital value that changes with the lapse of time are multiplied with each other thus calculating a change in capital value that changes with the lapse of time.

The change in capital value obtained based on the present invention is installed in the society by converting the change in capital value in a socially circulatable manner through a third organization, for example, the insurance underwriting of the parametric insurance.

At this stage, for example, the nature capital preservers obtain a consideration for the preservation of the natural capital. On the other hand, to ensure stability in their life, the natural capital preservers demand a compensation for damage when a natural resource is decreased due to an abnormal weather, a hazard or the like. In view of such a circumstance, the increase/decrease and the frequency of the natural capital are observed by remote sensing as indexes, and the insurance is assessed as a social loss by multiplying a result of the observation and a calculated capital value and a damage is compensated. By performing such steps, a natural capital is managed at a reasonable price based on a social objective and hence, an attracter directed to the social objective acts so that the social objective can be realized.

### Embodiment 7

In the embodiment 7, with respect to the social structure and a social operation example that can be realized by the capital value calculation system 1, their concepts are described in a comprehensive manner.

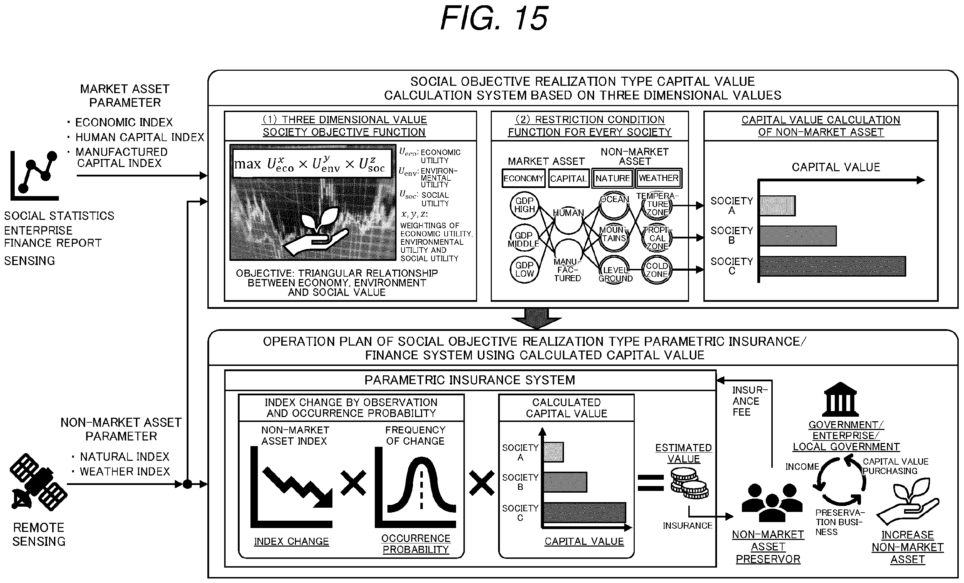

Fig. 15 is a view that illustrates the concept of the present invention in a comprehensive manner. In an upper portion of Fig. 15, the capital value calculation system 1 that is exemplified in Fig. 1 is functionally expressed. Further, in a lower portion of Fig. 15, the social application example exemplified in Fig. 14 is illustrated.

In the capital value calculation system 1, the market asset parameter P1 in the concerned region that is obtained by a means such as social statistics, corporate financial information or sensing; and the non-market asset parameter P2 that is obtained by a means such as remote sensing or ground sensing are inputted.

In this embodiment, the market asset parameter includes: values described in a balance sheet, a profit and loss statement and cash flow statement that indicate a finance condition; economic indexes that include household consumption expenditure, corporate investment spending, government and municipal spending, an export amount and an import amount; human capital indexes such as labor population; manufactured capital indexes such as vehicles, ships or factories, and rare resource indexes such as a mineral resource, a marine resource, and agricultural products. Further, the non-market asset parameter includes: a natural index such as marines, mountains, vegetation and an ecological system of a level ground, microorganisms; a weather index such as atmosphere, weather and climate; social capital indexes such as public roads, harbors, bridges and schools, and institutional capital indexes such as education, medical care and finance.

The capital value calculation system 1 includes a social objective function that is expressed as a weighted composite value of three utilities consisting of an economic utility, an environmental utility and a social utility where the market asset parameter P1 and the non-market asset parameter P2 are used as factors. In this case, the economic utility is a social objective component based on an economic index. The economic utility is, for example, a national gross product that is obtained by subtracting an import amount from a total expenditure and an export amount. Next, the environmental utility is a social objective component based on a natural index and a weather index. The environmental utility is, for example, a social objective component relating to aerial pollution such as a sulfur dioxide amount or a carbon monoxide amount in atmosphere, a social objective component relating to noise such as a sound pressure level, a social objective component relating to aquatic contamination such as groundwater cadmium, nitrate nitrogen, fluorine content, or a greenhouse effect such as a CO₂ amount or a methane amount in atmosphere. Lastly, the social utility is a social objective component based on all of an economic index, a human capital index, a manufactured capital index, a natural index, a weather index, a social capital index, and an institutional capital index. The social utility is measured based on an intraregional economic circulation rate, a social infrastructure sufficiency rate, education and medical system sufficiency rate, diversity of nature, vegetation and an ecological system.

Next, the capital value calculation system 1 solves the problems for maximizing an output of the above-mentioned social objective function under a restriction condition function of the market asset parameter P1 and the non-market asset parameter P2 in a predetermined society, and obtains the capital values of the market asset parameter P1 and the non-market asset parameter P2. In this case, the market asset parameter P1 and the non-market asset parameter P2 differ depending on a concerned region respectively. Further, weightings to three utilities consisting of the economic utility, the environmental utility and the social utility in the social objective function also differ and hence, the capital value of the non-market asset can take various values depending on the concerned region. By operating the non-market asset using the capital value of the non-market asset obtained in this manner as a signal, it is possible to allow the capital value calculation system 1 to reach a preset social objective in a stable manner.

On the other hand, as a social application example illustrated in a lower portion of Fig. 14, it is possible to estimate a social-objective-realization type parametric insurance or a finance system that makes use of a calculation capital value, for example. In this case, specifically, a parametric insurance system is illustrated as an operation plan that makes use of a calculated capital value of a non-market asset. The parametric insurance is, in general, also referred to as an index insurance and hence, in this specification, "parametric insurance" may be replaced by "index insurance".

The non-market asset preserver obtains a consideration by preserving a non-market asset that is measured by a natural index such as a forest or an ecological system, for example. However, the non-market preservers demand, to ensure stability in their life, damage compensation for the decrease of a non-market asset capital that may be caused by an abnormal weather, a hazard or the like. In view of such a circumstance, the increase/decrease and the frequency of the non-market asset are observed by remote sensing as indexes, and the insurance is assessed as a social loss by multiplying a result of the observation and a calculated capital value, and a damage is compensated. By performing such steps, a non-market asset is managed at a reasonable price based on a social objective and hence, an attracter that stably approaches the social objective works so that the social objective can be realized. The present invention discloses such a system and such an operation example.

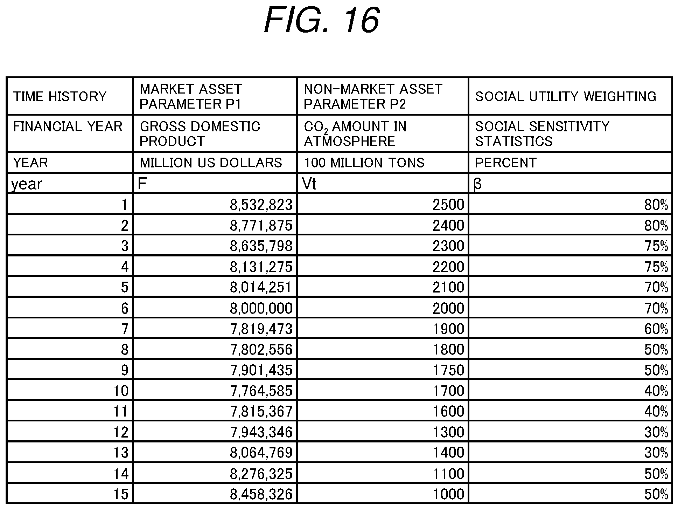

Data such as the market asset parameter P1, the non-market asset parameter P2 and the weighting to the social utility that are necessary for the capital value calculation system 1 are given in a form exemplified in Fig. 16, for example. In this case, the first line, the second line, the third line and the fourth line indicate categories of data, names of data, units of data, and symbols of data respectively. Then, scholar value data follow the above-mentioned data.

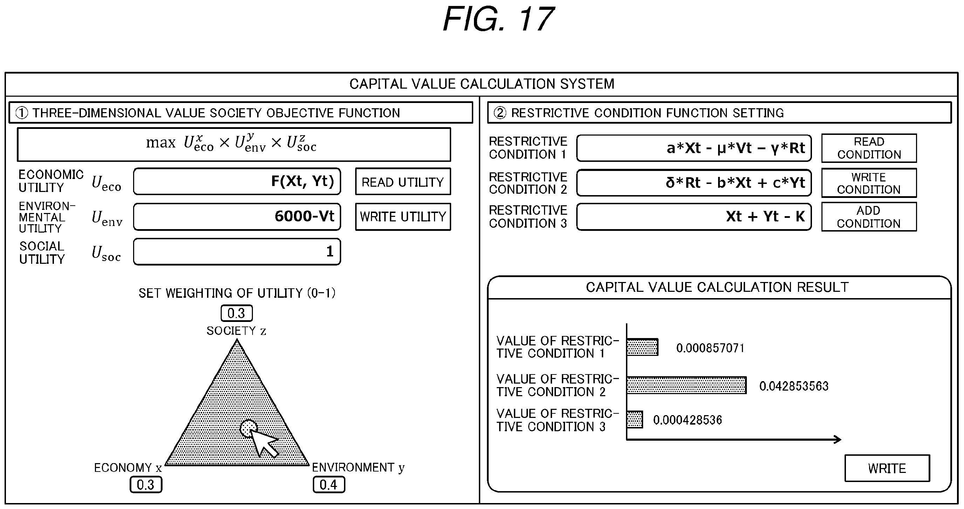

Further, it is not always estimated that a user operates the capital value calculation system 1. However, in a case where the capital value calculation system 1 is implemented as a computer application, the capital value calculation system 1 includes a user interface as illustrated in Fig. 17, for example. In this example, the user interface to which data are given in advance in the form exemplified I Fig. 16 is illustrated. The user interface, firstly, includes a unit for setting a three-dimensional value society objective function. Specifically, the user interface includes an input box in which economic utility, environmental utility and social utility are written as numerical formulas. In this case, variables used in the numerical formulas correspond to symbols of preset data. Further, the capital value calculation system 1 may include buttons for reading utilities that are preserved outside in advance and buttons for writing the numerical formulas described via the input box to the outside.

Next, the exemplified user interface includes a utility weighting setting unit where the weightings take scholar values within a range from 0 to 1. The utility weightings may be inputted via the input box, or may be set by a mouse operation using a certain one point in a triangle that visualizes a tradeoff of three-dimensional values in the society.

Next, the exemplified user interface may include an input box for setting restriction condition functions. In this case, the variables used in the numerical formulas correspond to the preset data symbols. Further, the capital value calculation system 1 may include buttons for reading conditions that are preserved outside in advance and buttons for writing the condition formulas described via the input box to the outside. In adding a condition, when a condition addition button is pressed, a box into which a new restriction condition is inputted appears.

Lastly, the exemplified user interface provides the result of the capital value calculation in a visually understandable form such as a bar graph. The unit that provides the result of the capital value calculation may include a writing button for writing the result.

### REFERENCE SIGNS LIST

1: capital value calculation system
10: social target function unit
11a: economic utility calculation unit
11b: environmental utility calculation unit
11c: social utility calculation unit
12a: economic utility weighting unit
12b: environmental utility weighting unit
12c: social utility weighting unit
21: restriction condition calculation unit
22: weighting coefficient unit
31: adding unit
41: weighting coefficient function calculation unit
42: capital value calculation unit
I: input unit
O: output unit
CPU: calculation processing unit
P1: market asset parameter
P2: non-market asset parameter

## Claims

1. A capital value calculation system that calculates a capital value using a computer, wherein
the computer comprises:
an input unit configured to obtain a market asset parameter that relates to economic activity of a human and is tradable in a market, and a non-market asset parameter that relates to activity of the human and is non-tradable in the market; and
a calculation processing unit configured to obtain 3 utilities consisting of economic utility, environmental utility and social utility of a concerned region from the market asset parameter and the non-market asset parameter, to calculate a social objective index of the concerned region as a weighted combined value of the 3 utilities, to calculate a weighting coefficient function of a restriction condition function that expresses correlation between the market asset parameter and the non-market-asset parameter that gives an extremum that is a difference between the social objective index and the restriction condition function, and to calculate a capital value by inputting the market asset parameter, and the non-market asset parameter into the weighting coefficient function; and
an output unit configured to output the capital value.

2. The capital value calculation system according to Claim 1, wherein
the market asset parameter includes at least one of a manufactured capital, a human capital, and a rear resource.

3. The capital value calculation system according to Claim 1 or 2, wherein
the non-market asset parameter includes at least one of a natural capital, a social capital, and an institutional capital.

4. The capital value calculation system according to at least one of the previous claims, wherein
the input unit that includes a predicted scenario input unit that inputs a predicted scenario in a concerned region that is expressed as a combination of the market asset parameter and the non-market asset parameter that are accessible under the restriction condition function; and a predicted social objective function in the concerned region that is expressed as a combination of weightings of three utilities consisting of an economy utility, an environmental utility and a social utility in the concerned region, and
the calculation processing unit calculates the capital value in the predicted scenario in the concerned region.

5. The capital value calculation system according to at least one of the previous claims, wherein
the input unit obtains, as the market asset parameter and the non-market asset parameter, a market asset parameter that changes with a lapse of time based on sensing or statistics of a market asset in a concerned region, and a non-market asset parameter that changes with the lapse of time based on sensing or statistics of a non-market asset in the concerned region.

6. The capital value calculation system according to Claim 5, wherein
the calculation processing unit calculates a capital value that changes with a lapse of time based on the market asset parameter that changes with the lapse of time and the non-market asset parameter that changes with the lapse of time, and
the output unit provides the capital value that changes with the lapse of time to a third organization after forming the capital value into a credit, a derivative, or an insurance product.

7. The capital value calculation system according to Claim 6, wherein
the calculation processing unit calculates a change in parameter between the market asset parameter that changes with the lapse of time and the non-market asset parameter that changes with the lapse of time and past parameters of these parameters, and frequency of a change in the parameter, and calculates a change in the capital value that changes with the lapse of time by multiplying the change in parameter, the frequency and the capital value that changes with the lapse of time.

8. The capital value calculation system according to Claim 6, wherein
the calculation processing unit calculates a social objective function at a point of time based on the market asset parameter that changes with a lapse of time and the non-market asset parameter that changes with the lapse of time, and calculates a social objective differential at this point of time from the social target function at the point of time and the social objective function, and multiplies a coefficient that is proportional to an objective differential value between a social objective differential at this point of time and a past social objective differential with the capital value that changes with the lapse of time.

9. A capital value calculation method for calculating a capital value using a computer,
the computer:
obtaining a market asset parameter that relates to economic activity of a human and is tradable in a market, and a non-market asset parameter that relates to activity of the human and is non-tradable in the market;
obtaining 3 utilities consisting of economic utility, environmental utility and social utility of a concerned region from the market asset parameter and the non-market asset parameter;
calculating a social objective index of the concerned region as a weighted combined value of the 3 utilities;
calculating a weighting coefficient function of a restriction condition function that expresses correlation between the market asset parameter and the non-market-asset parameter that gives an extremum that is a difference between the social objective index and the restriction condition function;
calculating a capital value by inputting the market asset parameter, and the non-market asset parameter into the weighting coefficient function; and
outputting the capital value.
